# EUROPÄISCHE PATENTSCHRIFT

(11) **EP 1 373 753 B1**
(45) Veröffentlichungstag und Bekanntmachung des Hinweises auf die Patenterteilung: **19.05.2010**
(21) Anmeldenummer: 02727268.1
(22) Anmeldetag: 26.03.2002
(51) Int. Cl.: F16F 9/02, F16F 9/34

(54) **GASFEDER-DÄMPFER-EINHEIT FÜR EIN KRAFTFAHRZEUG**
GAS SPRING DAMPER UNIT FOR A MOTOR VEHICLE
UNITE AMORTISSEUSE A SUSPENSION A AIR COMPRIME POUR AUTOMOBILE

(30) Priorität: 30.03.2001 DE 10115980
(43) Veröffentlichungstag der Anmeldung: 02.01.2004
(73) Patentinhaber: ContiTech Luftfedersysteme GmbH, 30165 Hannover (DE)
(72) Erfinder: GOLD, Henning, 55452 Dorsheim (DE); BRAUN, Patrik, 30952 Ronnenberg (DE); KOBS, Peter, 22089 Hamburg (DE); BERG, Jürgen, 22885 Barsbüttel (DE)
(74) Vertreter: Gulde Hengelhaupt Ziebig & Schneider
(86) Internationale Anmeldenummer: PCT/DE2002/001101
(87) Internationale Veröffentlichungsnummer: WO 2002/079664

(56) Entgegenhaltungen:
- EP-A- 0 798 485
- DE-C- 3 824 932
- FR-A- 1 366 203
- GB-A- 1 602 780
- GB-A- 2 036 247
- US-A- 4 064 977

## Beschreibung

Die Erfindung bezieht sich auf eine Gasfeder-Dämpfer-Einheit nach dem Oberbegriff des Anspruchs 1.
Gasfeder-Dämpfer-Einheiten dieser Art werden vorwiegend in der Kraftfahrzeugtechnik, beispielsweise für die Radaufhängung oder auch für einen federnden Fahrersitz, eingesetzt.

Gasfeder-Dämpfer-Einheiten sind grundsätzlich in einer Dreiraumausführung mit einem die Last tragenden Federraum und zwei gegenüberliegenden Dämpferräumen sowie in einer Zweiraumausführung mit einem kombinierten Federdämpferraum einerseits und einem Dämpferraum andererseits bekannt.
Eine Gasfeder-Dämpfer-Einheit in der Zweiraumausführung ist beispielsweise aus der DE 36 41 623 A1 bekannt. Diese Zweiraum-Gasfeder-Dämpfereinheit ist für eine Radaufhängung vorgesehen und besteht aus einem zylindrischen Gehäuse mit einem Deckel und einem im Gehäuse eingepassten, doppeltwirkenden Kolben. Der Kolben besitzt eine einseitige Kolbenstange, die den Deckel des Gehäuses durchdringt. Das Gehäuse einerseits und die Kolbenstange andererseits sind fest mit einem Karosserieteil bzw. mit der Radaufhängung verbunden, wobei das freiliegende Teil der Kolbenstange durch einen Balg abgedeckt ist. Dazu ist der Balg einerseits am Deckel des Gehäuses und andererseits am Kopf der Kolbenstange befestigt.

Der Kolben teilt den Zylinderraum des Gehäuses in einen beim Einfedern sich verkleinernden und einen sich vergrößernden Druckraum auf, von denen einer nach außen über einen Gehäuseanschluss mit einer Druckluftquelle und die untereinander durch eine oder mehrere, im Kolben angeordnete Überströmdrosseln verbunden sind.
Diese Überströmdrosseln sind aus einer Mehrzahl von einfachen axialen Drosselbohrungen gebildet, die auf einem gemeinsamen Teilkreis angeordnet sind und die in beide Bewegungsrichtungen die gleiche Drosselwirkung gegenüber dem ausgleichenden Luftstrom besitzen. Dadurch wird die Kolbenbewegung in beiden Richtungen in gleicher Stärke gedämpft. Das ist nachteilig, da wegen der geforderten Bodenhaftung der Räder für das Einfedern eine gegenüber dem Ausfedern geringere Dämpfbewegung erwünscht ist. Ein weiterer Nachteil hat seine Ursache darin, dass die Drosselbohrungen Konstantdrosseln darstellen und damit in Abhängigkeit von der Geschwindigkeit des Zylinderkolbens arbeiten. Das bedeutet, dass der Zuwachs an Drosselwirkung mit zunehmender Kolbengeschwindigkeit abnimmt.

Diese Forderungen werden von einer Überströmdrossel erfüllt, die in der DE 84 13 300 U1 gezeigt ist. Diese Überströmdrossel besteht aus einer mittigen Drosselbohrung mit einem Ringraum, der durch eine flexible Ringscheibe abgedeckt ist. Diese Ringscheibe hat einerseits einen äußeren Anschlag und andererseits einen inneren Anschlag, sodass sich die Ringscheibe in einer Durchflussrichtung am äußeren Rand und in der anderen Durchflussrichtung am inneren Rand vom jeweiligen Anschlag abhebt. Durch den unterschiedlichen Abstand der beiden Anschläge gegenüber der Mitte der Ringscheibe ergeben sich unterschiedliche Hebelarme, die für beide Durchflussrichtungen eine unterschiedliche Öffnungscharakteristik für die Ringscheibe bewirken. Bei einer richtigen Auswahl der Federkraft der Ringscheibe bleibt die Drosselwirkung und damit die Dämpfungskraft über den gesamten Geschwindigkeitsbereich des Zylinderkolbens gleich.
Diese Überströmdrosseln erfordern aber einen großen technischen Herstellungsaufwand, da zunächst einmal sehr komplizierte Kanalführungen erforderlich sind. Außerdem muss die Ringscheibe in höchst schwieriger Weise so gehalten und geführt sein, dass der äußere und der innere Randbereich der Ringscheibe wechselweise eine Dichtfunktion oder Haltefunktion erfüllt. Das verteuert wiederum die Herstellung. Dazu kommt, dass mit der Ringscheibe ein zusätzliches Teil notwendig ist, dass sich auch negativ auf die Herstellungskosten auswirkt. In funktioneller Hinsicht ist zu bemängeln, dass die Ringscheibe ein sich bewegendes Teil ist, das dem Verschleiß unterliegt und daher nur eine begrenzte Lebensdauer besitzt.

DE 3824932 offenbart eine gasfeder-dämpfer einheit nach dem oberbegriff des anspruchs 1.

Der Erfindung liegt daher die Aufgabe zu Grunde, eine gattungsgemäße Gasfeder-Dämpfer-Einheit zu entwickeln, die eine etwa gleichbleibende Dämpfungskraft über den gesamten Geschwindigkeitsbereich des Zylinderkolbens besitzt, in beiden Bewegungsrichtungen des Zylinderkolbens ein unterschiedliches Dämpfungsverhalten aufweist und die einfach und kostengünstig herzustellen ist.

Diese Aufgabe wird durch die kennzeichnenden Merkmale des Anspruches 1 gelöst.
Weitere Ausgestaltungsmöglichkeiten ergeben sich aus dem unter anspruch 2. Die neue Gasfeder-Dämpfer-Einheit beseitigt die genannten Nachteile des Standes der Technik.
Dabei liegt der besondere Vorteil darin, dass die Vorzüge einer Drosselöffnung mit einem Verschlusselement und die einer offenen Drosselöffnung verbunden werden. So handelt es sich bei den neuen Überströmdrosseln um offene Drosselöffnungen, die keinem Verschleiß unterliegen und damit nicht störanfällig sind und eine unbegrenzte Lebensdauer aufweisen. Der Aufwand zur Herstellung der neuen Überströmdrosseln ist gering.
In funktioneller Hinsicht wird erreicht, dass das Gas bei geringen Belastungen des Zylinderkolbens mit einer laminaren Strömungsart durch die Überströmdrosseln dringen. Die dabei erzielten Dämpfungskräfte sind wegen der geringen Druckdifferenz über den Überströmdrosseln und wegen der geringen, durch die laminare Strömung begründeten Druckverluste ebenfalls relativ gering. Das ist von Vorteil. Mit höheren Belastungen des Zylinderkolbens steigt die Druckdifferenz über den Überströmdrosseln und damit auch die Strömungswiderstände. So schwenkt durch die besondere Gestaltung und Dimensionierung der Überströmdrosseln bei einer vorberechneten Belastung des Zylinderkolbens die laminare Strömung in eine turbulente Strömung um, wodurch sich der Strömungswiderstand zusätzlich erhöht. Dieser zusätzliche Strömungswiderstand steigert wiederum die gewollte Dämpfungskräfte im oberen Geschwindigkeitsbereich des Zylinderkolbens. Das ist auch gewollt und von Vorteil.
Für die besondere Gestaltung der Überströmdrosseln kann auf alle bekannte und mögliche Möglichkeiten zurückgegriffen werden, die Einfluss auf den gesamten Strömungswiderstand haben. Dazu zählen beispielsweise die Länge, der Querschnitt, die Querschniusform, die Längsform und das Materials und die Oberflächenbeschaffenheit der Wandung der Überströmdrosseln.
In besonderer Weise kann der funktionelle Wirkungsschwerpunkt aller Strömungswiderstände von mindestens zwei der Überströmdrosseln außerhalb der radialen Mittellinie des Zylinderkolbens verlegt werden, dann stellen sich für beide Strömungsrichtungen unterschiedliche Strömungswiderstände und damit Dämpfungskräfte ein. Das ist auch gewollt und immer dann von Vorteil, wenn für beide Bewegungsrichtungen des Zylinderkolbens unterschiedliche Geschwindigkeiten verlangt werden.

Die Erfindung soll anhand eines Ausführungsbeispieles näher erläutert werden. Dazu zeigen:
- Fig. 1:: eine Gasfeder-Dämpfer-Einheit in der Zweiraumausführung im Schnitt,
- Fig. 2:: den Kolben der Gasfeder-Dämpfer-Einheit in einer Draufsicht,
- Fig. 3:: eine erste Ausführungsform einer Überströmdrossel,
- Fig. 4:: eine zweite Ausführungsform einer Überströmdrossel und
- Fig. 5:: eine nicht erfindungsgemäße dritte Ausführungsform einer Überströmdrossel.

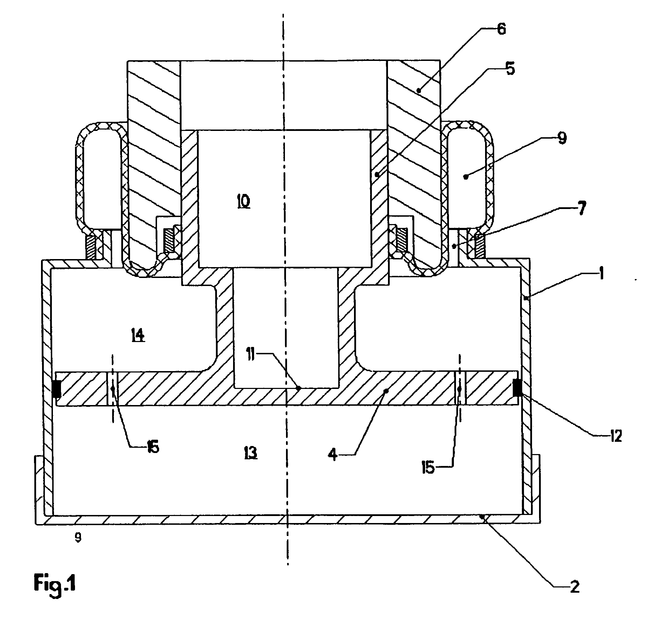

Wie die Fig. 1 zeigt, besitzt die Zweiraum-Gasfeder-Dämpfer-Einheit ein Zylindergehäuse 1 mit einem Gehäusefuß 2 einerseits und einer Gehäuseabdeckung 3 andererseits. Der Gehäusefuß 2 ist über nicht dargestellte Elemente mit dem Fahrzeugaufbau oder mit der Radaufhängung verbunden ist. Im Zylindergehäuse 1 befindet sich ein axial verschiebbar geführter Zylinderkolben 4 mit einer Kolbenstange 5 und einem Abrollkolben 6. Die Kolbenstange 5 und der Abrollkolben 6 sind fest miteinander verbunden und durchdringen gemeinsam die Gehäuseabdeckung 3 des Zylindergehäuses 1. Die Kolbenstange 5 und der Abrollkolben 6 sind in ihrer radialen Ausdehnung so ausgelegt, dass ein drosselfreier Ringkanal 7 zwischen dem Abrollkolben 6 und der Gehäuseabdeckung 3 verbleibt. Dieser Ringkanal 7 ist nach außen durch einen Luftfederbalg 8 druckdicht verschlossen, der aus einem strapazierbaren und flexiblen Material besteht und der einerseits an der Gehäuseabdeckung 3 und anderseits an der Kolbenstange 5 befestigt ist. Diese Luftfederbalg 8 besitzt eine solche räumliche Ausdehnung, dass er außerhalb des Zylindergehäuses 1 einen Balgraum 9 ausformt und mit diesem Balgraum 9 das Zylindergehäuse 1 nach außen abdichtet. Die Kolbenstange 5 ist aus Gründen der Verkürzung der Einbauhöhe mit einem Hohlraum 10 ausgestattet, der in seinem Grund eine Kraftangriffsfläche 11 für den Anschluss an den Fahrzeugaufbau oder die Radaufhängung besitzt.

Der Zylinderkolben 4 besitzt an seinem Umfang ein Dichtelement 12, womit der Innenraum des Zylindergehäuses 1 in einen beim Einfedern kleiner werdenden FederDämpferraum 13 und in einen beim Einfedern größer werdenden Dämpferraum 14 aufgeteilt wird.
Dieser Dämpferraum 14 ist über den bereits erwähnten den Ringkanal 7 mit dem Balgraum 9 verbunden. Im Zylinderkolben 4 befinden sich mehrere Überströmdrosseln 15, die den Federdämpferraum 13 und den Dämpferraum 14 in besonderer Weise miteinander verbinden. Eine externe Gasquelle sorgt in Verbindung mit einem nicht gesondert dargestellten Gasanschluss dafür, dass in den Innenräumen der Gasfeder-Dämpfer-Einheit ein vorbestimmter Gasdruck aufgebaut und gehalten wird.

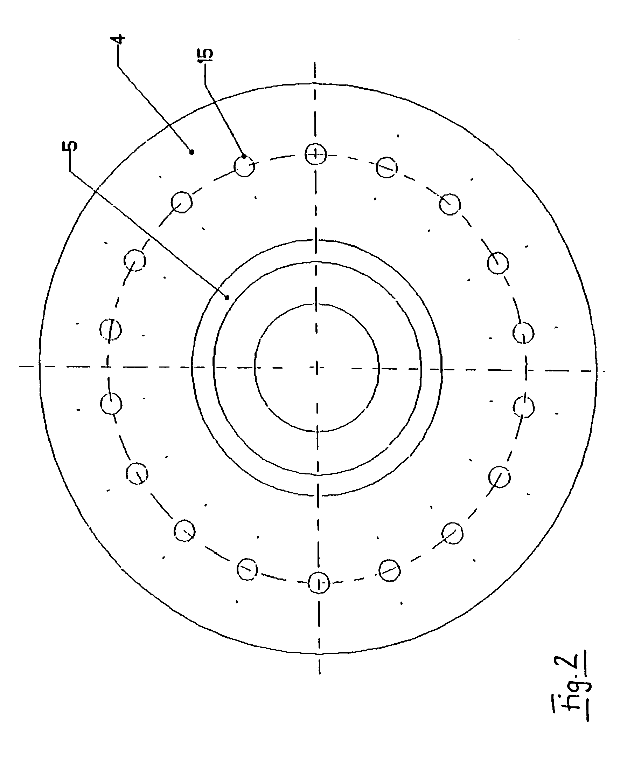

Die Fig. 2 zeigt eine ausgewählte Anordnung dieser Überströmdrosseln 15, bei der sich alle Überströmdrosseln 15 auf einem gemeinsamen Teilkreis des Zylinderkolbens 4 be finden und dabei zueinander gleichmäßig beabstandet sind.
Diese Überströmdrosseln 15 haben die Aufgabe, bei entsprechenden Bewegungen in beiden Richtungen des Zylinderkolbens 4 einen Volumenausgleich zwischen dem Federdämpferraum 13 und dem Dämpferraum 14 zu ermöglichen und dabei durch eine Drosselung des durchtretenden Gasstromes eine gedämpfte Bewegung des Zylinderkolbens 4 zu erreichen. Dementsprechend sind ein oder mehrere der Überströmdrosseln 15 in ihrem Querschnitt, der Länge und der Form in besonderer Weise auf den jeweiligen Anwendungsfall abgestimmt. Die Überströmdrosseln 15 haben weiterhin die Aufgabe, in beiden Durchströmungsrichtungen unterschiedliche Drosselwirkungen und damit unterschiedliche Dämpfungskräfte zu entwickeln.

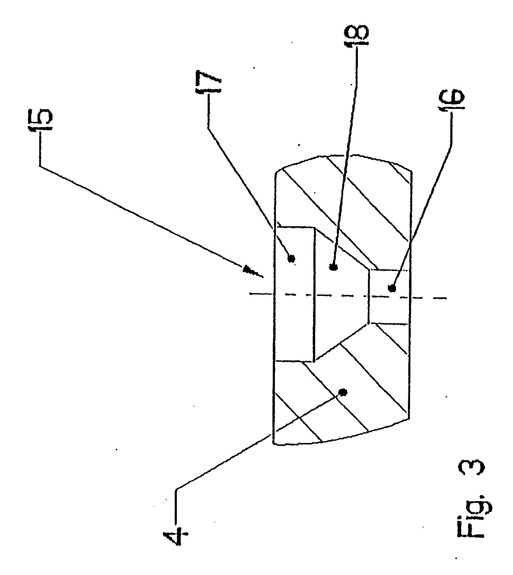

Dazu zeigen die Fig. 3 bis 5 eine Auswahl entsprechender Ausführungsformen.
So sind gemäß der Fig. 3 ein oder mehrere der Überströmdrosseln 15 jeweils gleichermaßen als eine zylindrische Bohrung mit einer zylindrischen Querschnittsverengung 16 und mit einer zylindrischen Querschnittserweiterung 17 ausgebildet. Zwischen der Querschnittsverengung 16 und der Querschnittserweiterung 17 befindet sich ein konischer Querschnitt 18, der die Querschnittsverengung 16 und die Querschnittserweiterung 17 im Durchmesser allmählich und kontinuierlich angleicht. Vorzugsweise sind mindestens diese Überströmdrosseln 15 so ausgerichtet, dass sich alle Querschnittsverengungen 16 außerhalb der radialen Mittelachse und auf der gleichen Seite des Zylinderkolbens 4 befinden.

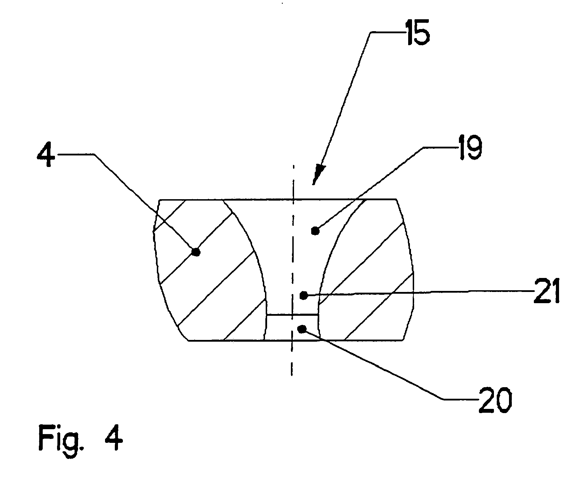

Gemäß der Fig. 4 bestehen ein oder mehrere der Überströmdrossel 15 nach der Art einer Laval-Düse aus einer Bohrung mit einem ersten konischen Querschnitt 19 und einem zweiten konischen Querschnitt 20, wobei beide konischen Querschnitte 19 und 20 entgegengerichtet sind. Beide Querschnitte 19, 20 sind durch eine gerundete Querschnittsverengung 21 miteinander verbunden. Diese gerundete Querschnittsverengung 21 befindet sich in einem Bereich außerhalb der radialen Mittelachse des Zylinderkolbens 1, also außerhalb der halben Drossellänge der Überströmdrossel 15. Vorzugsweise befinden sich die gerundeten Querschnittsverengungen 21 dieser Überströmdrosseln 15 auf der gleichen Seite des Zylinderkolbens 4.

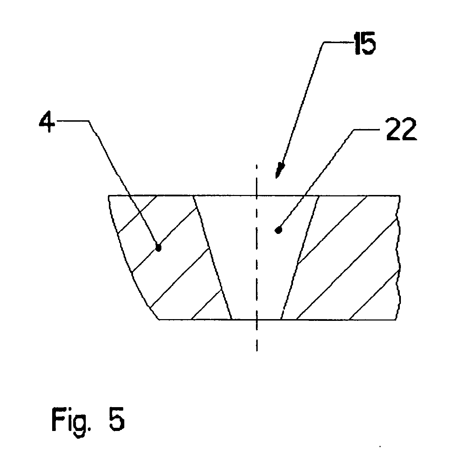

Nach der Fig. 5 ist die Überströmdrossel 15 eine sich über die gesamte Breite des Zylinderkolbens 4 erstreckende konische Bohrung 22. Vorzugsweise sind die konischen Bohrungen 22 aller Überströmdrosseln 15 in gleicher Richtung angeordnet.

Allen in den Fig. 3 bis 5 gezeigten und den davon ableitbaren Ausführungsformen von Überströmdrosseln ist gemeinsam, dass alle den Strömungswiderstand beeinflussenden Größen, wie die Länge, der Querschnitt, die geometrische Querschnittsform oder die Oberflächenbeschaffenheit jeder Überströmdrosseln 15 so ausgelegt ist, dass die den Umschlag der laminaren in die turbulente Strömungsart des Gases charakterisierende kritische Reynoldssche Zahl innerhalb der Druckdifferenzen über die Überströmdrossel 15 liegt, die durch die unterschiedlichen Geschwindigkeiten des Zylinderkolbens 4 auftreten können. Dabei sind eine bestimmte Anzahl oder alle Überströmdrosseln 15 mit Querschnittsverengungen 16, 21 ausgelegt, die stets außer der radialen Mittelachse und auf der gleichen Seite des Zylinderkolbens 4 angeordnet sind. Die Wahl der Anzahl der mit einer Querschnittsverengung 16, 21 ausgerüsteten Überströmdrosseln richtet sich im Falle einer gewünschten und gleichmäßigen Kräfteverteilung auch nach der gleichmäßigen Verteilung auf dem gemeinsamen Teilkreis.

### Liste der Bezugszeichen

- 1: Zylindergehäuse
- 2: Gehäusefuß
- 3: Gehäuseabdeckung
- 4: Zylinderkolben
- 5: Kolbenstange
- 6: Abrollkolben
- 7: Ringkanal
- 8: Luftfederbalg
- 9: Balgraum
- 10: Hohlraum
- 11: Kraftangriffsfläche
- 12: Dichtelement
- 13: Federdämpferraum
- 14: Dämpferraum
- 15: Überströmdrossel
- 16: Querschnittsverengung
- 17: Querschnittserweiterung
- 18: Konischer Querschnitt
- 19: Erster konischer Querschnitt
- 20: Zweiter konischer Querschnitt
- 21: gerundete Querschnittsverengung
- 22: Konische Bohrung

## Patentansprüche

1. Gasfeder-Dämpfer-Einheit für ein Kraftfahrzeug, bestehend aus einem Zylindergehäuse (1) und einem im Zylindergehäuse (1) verschiebbaren Zylinderkolben (4) mit einer Kolbenstange (5), wobei der Zylinderkolben (4) durch ein Dichtelement (12) gegenüber dem Zylindergehäuse (1) abgedichtet ist und die Kolbenstange (5) mit dem Zylindergehäuse (1) durch einen Rollbalg (8) verbunden ist, wodurch ein beim Einfedern kleiner werdender Federdämpferraum (13) und ein beim Einfedern größer werdender Dämpferraum (14) gebildet werden, die beide über eine in beiden Richtungen wirkende Drossel im Zylinderkolben (4) Verbindung haben und diese Drossel aus ein oder mehreren Überströmdrosseln (15) bestehen,
**dadurch gekennzeichnet, dass**
- die Überströmdrosseln (15) jeweils einen bezogen auf die Durchströmungsrichtung unterschiedlichen Strömungswiderstand besitzen und
- die Überströmdrosseln (15) jeweils aus einer durchgehenden Drosselbohrung mit mindestens einer Querschnittsverengung bestehen, wobei die Drosselbohrungen so ausgerichtet sind, dass sich alle Querschnittsverengungen (16, 21) punktuell außerhalb der Ebene auf halber Dicke des Zylinderkolbens (4) befinden und auf der Seite des sich beim Einfedern verkleinernden Federdämpferraum (13) angeordnet sind und
- die Drosselbohrung so bemessen ist, dass sich innerhalb der möglichen Kolbengeschwindigkeiten und in mindestens einer Durchströmungsrichtung die kritische Reynoldssche Zahl für den Übergang aus der laminaren in die turbulente Strömungsart einstellt.

2. Gasfeder-Dämpfer-Einheit nach Anspruch 1,
**dadurch gekennzeichnet, dass** der Strömungswiderstand jeder Überströmdrossel (15) durch die Drossellänge, dem Drosselquerschnitt, der Drosselform und/oder der Wandungsbeschaffenheit bestimmt wird.

## Claims

1. A gas spring muffler unit for a motor vehicle, consisting of a cylinder housing (1) and a cylinder piston (4) which is displaceable in the cylinder housing (1), with a piston rod (5), wherein the cylinder piston (4) is sealed by a sealing element (12) against the cylinder housing (1) and the piston rod (5) is connected to the cylinder housing (1) by means of roll bellows (8), as a result of which a spring muffler area (13) is formed which becomes smaller during deflection, and a muffler area (14) is formed which becomes larger during deflection, which are both connected in the cylinder piston (4) via a choke which acts in both directions, which choke consists of one or more overflow chokes (15),
**characterized in that**
- the overflow chokes (15) each have a different flow resistance in relation to the through-flow direction, and
- the overflow chokes (15) each consist of a choke through-bore with at least one cross-section construction, wherein the choke through-bores are aligned in such a manner that all cross-section constrictions (16, 21) are located punctiformly outside of the level at half the thickness of the cylinder piston (4) and are arranged on the side of the spring muffler area (13) which becomes smaller during deflection, and
- the choke through-bore is dimensioned in such a manner that within the possible piston speeds and in at least one direction of flow, the critical Reynolds number occurs for the transfer from the laminar into the turbulent flow type.

2. A gas spring muffler unit according to claim 1,
**characterized in that** the flow resistance of every overflow choke (15) is determined by the choke length, the choke cross-section, the choke form and/or the nature of the walls.

## Revendications

1. Unité amortisseur à ressort pneumatique pour un véhicule, se composant d'une enveloppe de cylindre (1) et d'un piston de cylindre (4) déplaçable dans l'enveloppe de cylindre (1) avec une tige de piston (5), le piston de cylindre (4) étant étanchéifié par un élément d'étanchéité (12) relativement à l'enveloppe de cylindre (1) et la tige de piston (5) étant reliée avec l'enveloppe de cylindre (1) par un soufflet déroulant (8), grâce à quoi un espace d'amortisseur à ressort (13) diminuant lors de la compression et un espace d'amortisseur (14) augmentant lors de la compression sont formés, lesquels sont tous les deux reliés par un limiteur dans le piston de cylindre (4) agissant dans les deux sens et ce limiteur se composant d'un ou plusieurs limiteurs de surpression (15),
**caractérisée en ce que**
- les limiteurs de surpression (15) possèdent respectivement une résistance à l'écoulement différente, relativement à la direction d'écoulement et
- les limiteurs de surpression (15) se composent respectivement d'un orifice d'étranglement traversant avec au moins un rétrécissement de section, les orifices d'étranglement étant orientés de telle sorte que tous les rétrécissements de section (16, 21) se trouvent ponctuellement hors du plan à la moitié de l'épaisseur du piston de cylindre (4) et sont disposés sur le côté de l'espace d'amortisseur à ressort (13) diminuant lors de la compression et
- l'orifice d'étranglement est de dimensions telles que, dans la plage des vitesses de piston possibles et dans au moins une direction d'écoulement, le nombre de Reynolds critique se fixe pour la transition du régime d'écoulement laminaire au régime d'écoulement turbulent.

2. Unité amortisseur à ressort pneumatique pour un véhicule selon la revendication 1,
**caractérisée en ce que**
la résistance à l'écoulement de chaque limiteur de surpression (15) est déterminée par la longueur du limiteur, la section du limiteur, la forme du limiteur et/ou la constitution de la paroi.
